Europäisches Patentamt

European Patent Office

Office européen des brevets

(19)

(11) **EP 1 404 545 B1**

(12) **EUROPÄISCHE PATENTSCHRIFT**

| | |
|---|---|
| (45) Veröffentlichungstag und Bekanntmachung des Hinweises auf die Patenterteilung: **15.11.2006 Patentblatt 2006/46** | (51) Int Cl.: **B60R 1/00** *(2006.01)* **G08G 1/16** *(2006.01)* **H04N 7/18** *(2006.01)* |
| (21) Anmeldenummer: **02750789.6** | (86) Internationale Anmeldenummer: **PCT/DE2002/002190** |
| (22) Anmeldetag: **15.06.2002** | (87) Internationale Veröffentlichungsnummer: **WO 2003/002375 (09.01.2003 Gazette 2003/02)** |

(54) **VORRICHTUNG ZUR BILDDETEKTION VON GEGENSTÄNDEN, PERSONEN ODER DERGLEICHEN IM UMFELD EINES FAHRZEUGES**

DEVICE FOR IMAGE DETECTING OBJECTS, PEOPLE OR SIMILAR IN THE AREA SURROUNDING A VEHICLE

DISPOSITIF POUR LA DETECTION PAR IMAGERIE D'OBJETS, DE PERSONNES OU AUTRES A LA PERIPHERIE D'UN VEHICULE

| | |
|---|---|
| (84) Benannte Vertragsstaaten: **DE FR IT** | (72) Erfinder: **STILLER, Christoph 76275 Ettlingen (DE)** |
| (30) Priorität: **28.06.2001 DE 10131196** | (56) Entgegenhaltungen: **WO-A-92/19811**   **WO-A-96/38319** **US-A- 5 473 364** |
| (43) Veröffentlichungstag der Anmeldung: **07.04.2004 Patentblatt 2004/15** | • **GROSSO E ET AL: "Active/dynamic stereo vision" IEEE TRANSACTIONS ON PATTERN ANALYSIS AND MACHINE INTELLIGENCE, SEPT. 1995, USA, Bd. 17, Nr. 9, Seiten 868-879, XP000532208 ISSN: 0162-8828** |
| (73) Patentinhaber: **ROBERT BOSCH GMBH 70442 Stuttgart (DE)** | |

EP 1 404 545 B1

## Beschreibung

## Technisches Gebiet

Die Erfindung betrifft eine Vorrichtung zur Detektion von Gegenständen, Personen oder dergleichen, insbesondere im Umfeld eines Fahrzeuges.

## Stand der Technik

Aus der Druckschrift IEEE Intelligent Vehicles Symposium, Okt. 2000, "Real-time stereo vision for for urban traffic scene understanding", U. Franke ist bekannt, das Umfeld eines Fahrzeuges mit einer Bildaufzeichnungseinheit zu erfassen, die zur Aufnahme dreidimensionaler Bilder eine Stereokamera umfasst. Durch Auswertung der aufgenommenen Szene kann die Position, beispielsweise weiterer Fahrzeuge, Personen oder Gegenstände, im Umfeld des Fahrzeuges ermittelt werden. Anhand dieser Informationen kann die Längs- und/oder Querführung des Fahrzeuges durch einen Regler beeinflusst werden, so dass der Fahrer bei der Fahrzeugführung unterstützt wird und der Fahrkomfort und die Verkehrssicherheit verbessert werden können. Beispielsweise kann im Falle einer drohenden Kollision ein automatisches Ausweich- oder Bremsmanöver die Kollision vermeiden oder wenigstens die Kollisionsenergie reduzieren.

Aus dem Dokument MIT Press, 1995, "Three dimensional computer vision: a geometric viewpoint", O. Faugeras ist bekannt, wie ein Stereokamerasystem die dreidimensionale Geometrie der auf das Bildpaar projizierten Umwelt durch Triangularisierung ermittelt, das heißt durch Bestimmung des Schnittpunktes der in die jeweils linke und rechte Kamera einfallenden Lichtstrahlen. Hierbei wird festgestellt, dass die Position der Kameraköpfe, also die Ausrichtung von deren optischen Achsen, einer Stereokamera die Detektionseigenschaften erheblich beeinflusst und manche Objekte aufgrund ihrer Position oder Textur eine Stereosensierung erschweren.

Die Wahl der optischen Brennweite einer starren Stereoanordnung erfordert grundsätzlich einen Kompromiss zwischen Reichweite und Blickwinkel In Fahrzeuganwendungen sind jedoch an beide Größen hohe Anforderungen gestellt. So ist bei Fahrgeschwindigkeiten von zirka 200 km/h - beispielsweise nach der so genannten "Halbe-Tacho-Regel" - eine Reichweite von mehr als 100 m erforderlich. Gleichzeitig erfordert eine zuverlässige Erfassung von Verkehrzeichen große Blickwinkel von beispielsweise 70°. Diese Anforderungen sind mit den bekannten Stereokameras nicht einhaltbar.

Zur Abhilfe ist in IEEE Intelligent Vehicles Symposium, Okt. 2000, "EMS-Vision: Gaze control in autonomous vehicles", M. Pellkofer und E. D. Dickmanns vorgeschlagen worden, auf eine drehbare Plattform einzelne Monokameras mit unterschiedlicher Brennweite zu montieren. Hierdurch wird eine Vergroßerung des erfassbaren Blickwinkels möglich. Die Kameraplattform wird hierbei auf ein fernes Objekt oder auf ein seitlich zur Fahrtrichtung befindliches Objekt, beispielsweise ein Verkehrszeichen, ausgerichtet.

Aus der Schrift IEEE Transactions on Pattern Analysis and Machine Intelligence, sept 1995, "Active/ dynamic stereo vision," E.Grosso et al., ist eine stereosensitive Bildaufzeichnungseinheit mit zwei Bildsensoren, deren optische Achsen beweglich sind, bekannt.

## Darstellung der Erfindung, Aufgabe, Lösung, Vorteile

Der Erfindung liegt die Aufgabe zugrunde, eine Vorrichtung der gattungsgemäßen Art anzugeben, mittels der in einfacher Weise eine dreidimensionale Geometrie eines Fahrzeugumfeldes sowohl mit großer Reichweite als auch mit großem Blickwinkel variabel erfassbar ist.

Erfindungsgemäß wird diese Aufgabe durch eine Vorrichtung mit den im Anspruch 1 genannten Merkmalen gelöst. Dadurch, dass die Bildaufzeichnungseinheit wenigstens zwei Bildsensoren umfasst, wobei die optischen Achsen der Bildsensoren relativ zueinander und/oder relativ zum Fahrzeug veränderbar ausrichtbar sind, ist vorteilhaft möglich, die Geometrie der Bildaufzeichnungseinheit an die aktuell erforderliche Reichweite beziehungsweise den Blickwinkel anzupassen. Es wird eine generell hohe Reichweite durch Wahl einer langen Brennweite möglich, wobei ein augenblicklich geringerer Blickwinkel in Kauf genommen werden kann, da die erfindungsgemäße Vorrichtung eine Vergrößerung des Blickwinkels jederzeit wieder erlaubt. Ferner ist vorteilhaft möglich, durch die relativ zueinander veränderbar ausrichtbaren optischen Achsen der Bildsensoren eine Variation eines Stereobereiches der Bildaufzeichnungseinheit zu erzielen. Entsprechend der Ausrichtung der optischen Achsen relativ zueinander kann der Überlappungsbereich der Erfassungsbereiche der einzelnen Bildsensoren vergrößert beziehungsweise verkleinert werden. Denkbar sind hier vorzugsweise auch Varianten, nach denen wenigstens einer der Bildsensoren in Fahrtrichtung ausgerichtet ist, während ein anderer der Bildsensoren quer zur Fahrtrichtung ausgerichtet ist. So lässt sich auch eine zeitweise monokulare Bildauswertung jeder der von den Bildsensoren gelieferten Signale erreichen, wenn dies bei entsprechender Situation erforderlich beziehungsweise ausreichend erscheint. Dadurch, dass die optischen Achsen zusätzlich relativ zum Fahrzeug veränderbar ausrichtbar sind, kann vorzugsweise der Überlappungsbereich der Erfassungsbereiche der Bildsensoren auch relativ zum Fahrzeug verschwenkt werden und auch dort in seiner Größe variiert werden. So kann vorzugsweise beispielsweise während eines Einparkvorganges eine Stereovermessung einer angepeilten Parklücke, die sich beispielsweise seitlich vom Fahrzeug befindet, erfolgen. Ferner ist vorteilhaft, dass durch die variable Einstellbarkeit der optischen Achsen auch sich im Umfeld befindliche, aufgrund ihrer Form und/oder Textur nur schwierig stereosensierbare Körper oder dergleichen erfassen und auswerten lassen.

Weitere bevorzugte Ausgestaltungen der Erfindung ergeben sich aus den übrigen, in den Unteransprüchen genannten Merkmalen.

## Kurze Beschreibung der Zeichnungen

Nachstehend wird die Erfindung in Ausführungsbeispielen anhand der beigefügten Zeichnungen näher erläutert. Es zeigen:

Fig. 1a und 1b    schematische Ansichten eines Fahrzeuges mit einer erfindungsgemäßen Vorrichtung;

Fig. 2 bis 6    schematisch verschiedene Ausrichtmöglichkeiten der erfindungsgemäßen Vorrichtung und

Fig. 7    ein Flussdiagramm einer Steuerung der erfindungsgemäßen Vorrichtung.

## Bester Weg zur Ausführung der Erfindung

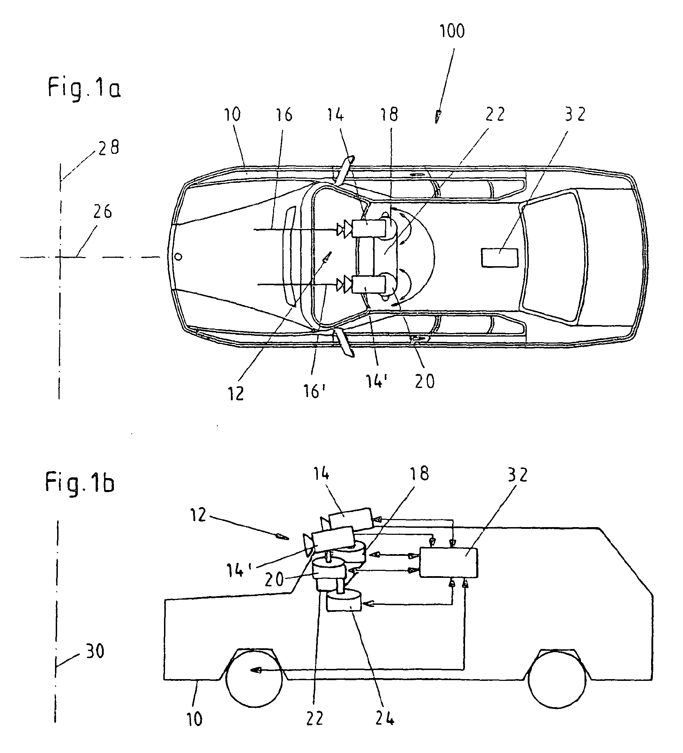

In Fig. 1a und 1b ist jeweils ein Kraftfahrzeug 10 schematisch in Draufsicht und in Seitenansicht gezeigt. Das Kraftfahrzeug 10 besitzt eine insgesamt mit 100 bezeichnete Vorrichtung zur Detektion von Gegenständen, Personen oder dergleichen in einem Umfeld des Kraftfahrzeuges. Die Vorrichtung 100 umfasst eine Bildaufzeichnungseinheit 12, die zwei Bildsensoren 14 beziehungsweise 14' (nachfolgend auch Kameras 14 beziehungsweise 14' genannt) aufweist. Die Kameras 14 beziehungsweise 14' werden beispielsweise von CMOS-Kameras gebildet. Entsprechend dem Aufbau der Kameras 14 beziehungsweise 14' besitzen diese optische Achsen 16 beziehungsweise 16'. Diese sind lediglich in Fig. 1a schematisch angedeutet. Die optischen Achsen 16 beziehungsweise 16' bestimmen die Ausrichtung der Kameras 14 beziehungsweise 14' und somit deren Bilderfassungsbereich.

Der Kamera 14 ist eine erste Antriebseinrichtung 18 und der Kamera 14' eine zweite Antriebseinrichtung 20 zugeordnet. Die Antriebseinrichtungen 18 und 20 sind auf einem Träger 22 angeordnet, dem wiederum eine dritte Antriebseinrichtung 24 zugeordnet ist. Die Antriebseinrichtungen 18, 20 beziehungsweise 24 werden beispielsweise von Schrittmotoren oder kontinuierlich verstellbaren Motoren gebildet. Mittels der Antriebseinrichtungen 18, 20 und 24 ist die relative Lage der optischen Achsen 16 beziehungsweise 16' der Kameras 14 beziehungsweise 14' zueinander und/oder zum Kraftfahrzeug 10 veränderbar. Hierbei kann prinzipiell eine Verschwenkung der optischen Achsen 16 beziehungsweise 16' zu einer Fahrzeuglängsachse 26, zu einer Fahrzeugquerachse 28 und/oder zu einer Fahrzeughochachse 30 erfolgen. Gemäß dem dargestellten Ausführungsbeispiel wird davon ausgegangen, dass die Kameras 14 beziehungsweise 14' um die Fahrzeughochachse 30 mittels der Antriebseinrichtungen 18, 20 beziehungsweise 24 drehbar sind. Hierbei ist die Kamera 14 über die Antriebseinrichtung 18, die Kamera 14' über die Antriebseinrichtung 20 und der Träger 22 über die Antriebseinrichtung 24 jeweils separat um die Fahrzeughochachse 30 drehbar, so dass es entsprechend den Ansteuerungen der Antriebseinrichtungen 18, 20 und 24 zu beliebigen Ausrichtungen der optischen Achsen 16 beziehungsweise 16' in der Horizontalebene kommt. Entsprechend einer eventuellen Winkelstellung der Kameras 14 und 14' und somit einer entsprechenden Winkelstellung der optischen Achsen 16 beziehungsweise 16' zur Horizontalebene können diese optischen Achsen 16 und 16' auch auf einer Kegelmantelfläche relativ zueinander und/oder relativ zum Kraftfahrzeug 10 veränderbar ausrichtbar sein. Die Bildaufzeichnungseinheit 12 ist vorzugsweise an einem Dachmodul des Fahrzeuges 10 angeordnet.

Sowohl die Kameras 14 und 14' als auch die Antriebseinrichtungen 18, 20 und 24 sind mit einer Auswerteeinheit 32 verbunden, die wenigstens einen Signalverarbeitungsprozessor umfasst. Mittels der Auswerteeinheit 32 werden die von den Kameras 14 und 14' gelieferten Bildsignale verarbeitet und Steuersignale für die Antriebseinrichtungen 18, 20 und 24 generiert. Über die Auswerteeinheit 32 sind ferner weitere Aktoren des Kraftfahrzeuges 10, beispielsweise in Abhängigkeit der mittels der Bildaufzeichnungseinheit 12 gelieferten Bilder, ansteuerbar. Derartige Aktoren können beispielsweise Stellglieder von Bremseinrichtungen, E-Gaseinrichtungen, Lenkeinrichtungen oder dergleichen sein. Zur Signalverarbeitung kann die Auswerteeinheit ferner mit weiteren, nicht dargestellten Sensoren verbunden sein, von denen zusätzliche Informationen, wie Betriebsparameter des Kraftfahrzeuges 10, bereitstellbar sind.

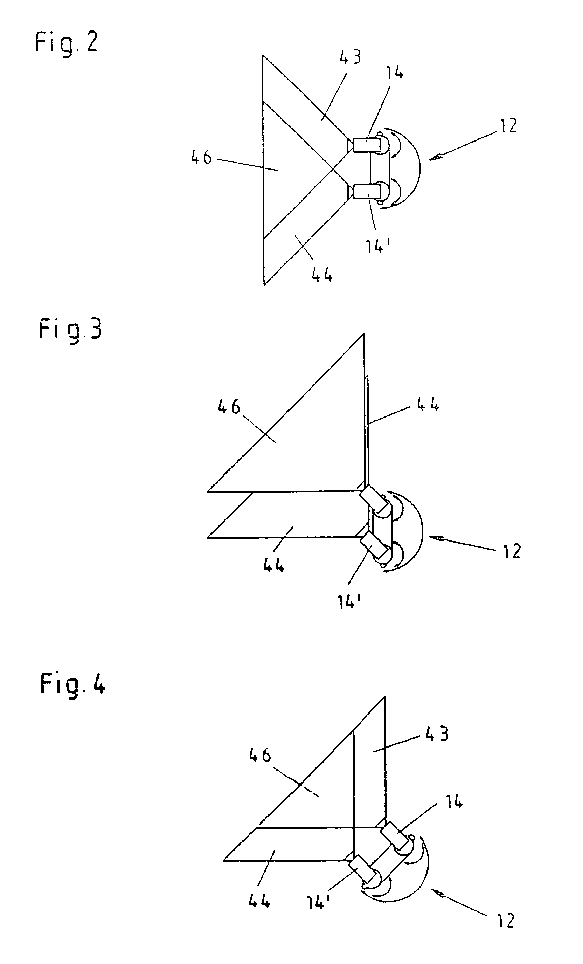

Die Funktion der erfindungsgemäßen Vorrichtung wird anhand der Fig. 2 bis 7 näher erläutert.

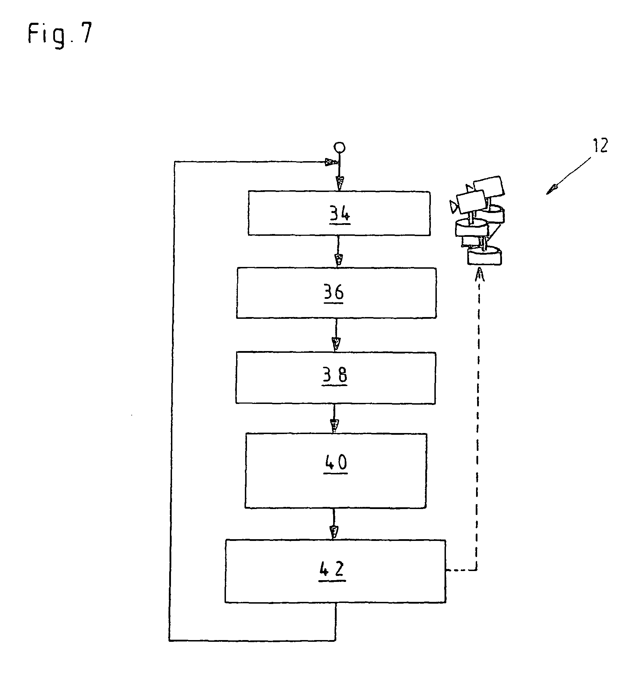

Fig. 7 zeigt ein Flussdiagramm, wonach in einem ersten Schritt 34 von der Auswerteeinheit 32 ein von den Kameras 14 beziehungsweise 14' aufgenommenes Bildpaar erfasst wird. In einem nächsten Schritt 36 werden korrespondierende Bildbereiche in den beiden, aus geringfügig unterschiedlichen Blickwinkeln (entsprechend dem Abstand der Kameras 14 beziehungsweise 14' zueinander) aufgenommenen Bildern gesucht. Wo diese korrespondierenden Bildbereiche liegen, erstellt die Auswerteeinheit 32 aus der ungefähren Kenntnis der Kamerastellungen (über die Ansteuerung der Antriebseinrichtungen 18, 20 und 24 bekannt) und gegebenenfalls aus vorhergehender Auswertung der Kalibrierung und der dreidimensionalen Geometrie der aufgenommenen Szene. Mit Hilfe dieser groben Kenntnis korrespondierender Bildpositionen lassen sich mit an sich bekannten Suchverfahren zur Verschiebungsschätzung die genauen Orte korrespondierender Bereiche in den beiden Bildern ermitteln. Aus der nunmehr vorliegenden Kenntnis der korrespondierenden Bildbereiche lasst sich die relative Orientierung zwischen den beiden Kameras 14 beziehungsweise 14' bestimmen (Schritt 38). Dies kann beispielsweise durch Ermittlung der so genannten Essential Matrix E durch geeignete Auflösung des Gleichungssystems

$$\begin{pmatrix} x_1 \\ y_1 \\ 1 \end{pmatrix}^T E \begin{pmatrix} x_2 \\ y_2 \\ 1 \end{pmatrix} = 0$$

erfolgen, wobei die 3x3 Matrix die Bedingungen einer Essential Matrix erfüllt, und x und y die korrespondierenden Koordinaten im Bild der rechten und linken Kamera 14 beziehungsweise 14' bildet. Somit erhält man je korrespondierendem Punktepaar eine Bestimmungsgleichung. Mit einer ausreichenden Zahl von Punktpaaren lässt sich die Essential Matrix daher bestimmen. Die bisherige Ansteuerung der Antriebseinrichtungen 18, 20 beziehungsweise 24, sowie eine Kenntnis der Szenengeometrie aus vorausgegangenen Messungen, kann vorteilhaft zusätzlich als Vorkenntnis zur Stabilisierung des Gleichungssystems genutzt werden. Als geeignetes Lösungsverfahren können Standardverfahren, beispielsweise ein robustes extended Kalmanfilter, verwendet werden.

In einem nächsten Schritt 40 wird die erfasste Szene einer Stereobildauswertung mit bekannter Kalibrierung unterzogen, das heißt, die Geometrie von Straße und von Objekten, Personen oder dergleichen wird dreidimensional vermessen. Dabei werden die zuvor bestimmte Orientierung der beiden Kameras 14 beziehungsweise 14' und die Punktkorrespondenzen im an sich bekannten Triangularisierungsverfahren zusammengebracht.

In einem nächsten Schritt 42 wird die aufgenommene Szene analysiert und daraus geeignete Bereiche für eine Monoerfassung und eine Stereoerfassung situationsabhängig identifiziert. Entsprechend dieser Identifizierung von Monobereichen und Stereobereichen werden die Antriebseinrichtungen 18, 20 und 24 durch die Auswerteeinheit 32 entsprechend angesteuert, so dass es zu einer relativen Verstellung der optischen Achsen 16 beziehungsweise 16' zueinander beziehungsweise gegebenenfalls zum Kraftfahrzeug 10 kommt. Entsprechend der Ausrichtung der optischen Achsen 16 und 16' werden die Bilderfassungsbereiche der Kameras 14 beziehungsweise 14' mehr oder weniger überlagert. Ein sich herausbildender Überlagerungsbereich definiert dann die Stereoerfassung der aufgenommenen Szene und die nicht überlagerten Bereiche definieren die Monoerfassung der aufgenommenen Szene.

Anhand der Fig. 2 bis 6 sind hierzu einige Beispiele schematisch angedeutet, ohne jedoch Anspruch auf Vollständigkeit für die möglichen Varianten zu erheben.

In den Fig. 2 bis 6 ist jeweils der Bilderfassungsbereich der Kamera 14 mit 43 und der Bilderfassungsbereich der Kamera 14' mit 44 bezeichnet. Entsprechend der Ausrichtung der optischen Achsen 16 beziehungsweise 16' kommt es zu einem Überlagerungsbereich 46 der beiden Bilderfassungsbereiche 43 beziehungsweise 44. Der Überlagerungsbereich 46 definiert die Stereoerfassung der aufgenommenen Szene und die übrigen Abschnitte der Bilderfassungsbereiche 43 beziehungsweise 44 (außerhalb des Überlagerungsbereiches 46) definieren die Monoerfassung der aufgenommenen Szene.

Fig 2 zeigt beispielhaft, dass die Kameras 14 beziehungsweise 14' in Fahrzeuglängsachse 26 parallel zueinander ausgerichtet sind. Hierdurch wird ein günstiger Stereoerfassungsbereich 46 in Fahrtrichtung erhalten, während Randbereiche von untergeordneter Bedeutung sind.

Fig. 3 veranschaulicht eine Variante, bei der die Kameras 14 beziehungsweise 14' jeweils nach rechts zur Fahrzeuglängsachse 26 verschwenkt parallel ausgerichtet sind. Hierdurch ergibt sich ein großer, sich nach rechts orientierender Stereoerfassungsbereich 46, der beispielsweise bei der Vermessung von Einparkszenen oder dergleichen vorteilhaft ist.

Im Unterschied zu Fig. 3 ist in Fig. 4 eine Ausführungsvariante gezeigt, bei der nicht die Kameras 14 beziehungsweise 14' einzeln durch die Antriebseinrichtungen 18 und 20 um die Fahrzeughochachse 30 verschwenkt werden, sondern der Träger 22 insgesamt durch die Antriebseinrichtung 24 um die Fahrzeughochachse 30 verschwenkt wird. Hierdurch bleibt ebenfalls eine parallele Ausrichtung der Kameras 14 und 14' erhalten und gleichzeitig wird ein gegenüber Fig. 3 vergrößerter Blickwinkel realisiert.

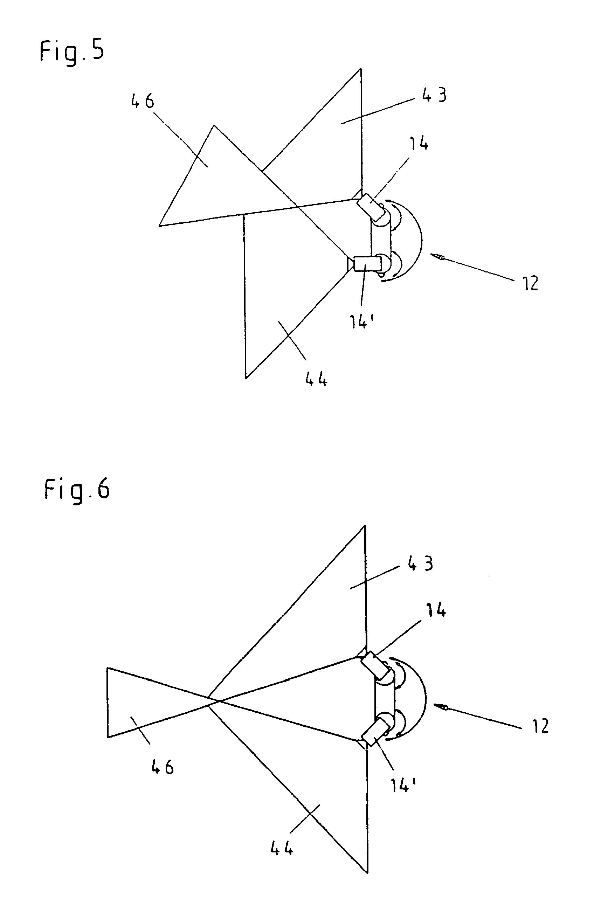

Fig. 5 zeigt eine Variante, bei der die Kamera 14' in Fahrzeuglängsachse 26 ausgerichtet bleibt, während die Kamera 14 nach rechts zur Fahrzeuglängsachse 26 verschwenkt ist. Hierdurch wird beispielsweise möglich, am rechten Fahrbahnrand sich befindende Verkehrszeichen oder dergleichen mit großem Blickwinkel zu erfassen, gleichzeitig jedoch die Szene vor dem Kraftfahrzeug in Fahrtrichtung zu beobachten.

Fig. 6 zeigt eine Ausführungsvariante, bei der die Kamera 14 rechts zur Fahrzeuglängsachse 26 und die Kamera 14' links zur Fahrzeuglängsachse 26 verschwenkt ist. Hierdurch wird der Blickwinkel der Bildaufzeichnungseinheit 12 insgesamt vergrößert, während sich der Stereoerfassungsbereich 46 verkleinert. Mittels einer derartigen Ausrichtung der Kameras 14 beziehungsweise 14' kann insbesondere eine monokulare Bildverarbeitung, das heißt mit relativ großen Monoerfassungsbereichen 43 beziehungsweise 44, erfolgen. Dies ist beispielsweise zu einer Verkehrszeichenerkennung ausreichend.

Die gezeigten Ausführungsbeispiele verdeutlichen ohne weiteres die variable Einsatzmöglichkeit der Bildaufzeichnungseinheit 12 durch die jeweils einzeln ansteuerbaren Antriebseinrichtungen 18, 20 und 24. Somit lassen sich unterschiedlichste Blickwinkel und Reichweiten mit verschiedensten Stereoerfassungsbereichen 46 und Monoerfassungsbereichen 43 beziehungsweise 44 in einfacher Weise kombinieren. Insbesondere wird hierdurch auch vorteilhaft eine Auflösung von Unsicherheit der Stereoanalyse möglich, die dann eintritt, wenn die Textur eines Objektes parallel zur Epipolaren (Gerade, welche die Orte möglicher Punktkorrespondenzen beschreibt) ins Bild projiziert wird. Durch Drehung der Kamerabasis um wenigstens eine der Achsen 26, 28 und 30 kann die Epipolare im Bild gedreht werden, so dass die Textur nicht mehr parallel verläuft und die Punktkorrespondenz eindeutig hergestellt wird.

**Patentansprüche**

1. Vorrichtung (100) zur Detektion von Gegenständen, Personen oder dergleichen im Umfeld eines Fahrzeugs (10) mit einer stereosensitiven Bildaufzeichnungseinheit (12), die wenigstens zwei Bildsensoren (14, 14') umfasst, und einer Auswerteeinheit (32) zur Auswertung der von den Bildsensoren gelieferten Signale, **dadurch gekennzeichnet, dass** die optischen Achsen (16, 16') der Bildsensoren (14, 14') relativ zueinander verändert ausgerichtet werden, so dass ein Überlappungsbereich (46) von Erfassungsbereichen (43, 44) der wenigstens zwei Bildsensoren entsprechend der Veränderung der optischen Achsen vergrößert bzw. verkleinert wird, wobei vorgesehen ist, dass in einer Variante wenigstens einer der Bildsensoren (14') in Fahrtrichtung des Fahrzeugs (10) ausgerichtet ist, während ein anderer Bildsensor (14) quer zur Fahrtrichtung ausgerichtet ist.

2. Vorrichtung nach Anspruch 1, **dadurch gekennzeichnet, dass** die optischen Achsen (16, 16') relativ zum Fahrzeug (10) verändert ausgerichtet werden, insbesondere dass die optischen Achsen (16, 16') zu einer Fahrzeuglängsachse (26) und/oder einer Fahrzeugquerachse (28) und/oder einer Fahrzeughochachse (30) verändert ausgerichtet werden.

3. Vorrichtung nach einem der vorhergehenden Ansprüche,
**dadurch gekennzeichnet, dass**
jedem der Bildsensoren (14, 14') eine Antriebseinrichtung (18, 20) zugeordnet ist.

4. Vorrichtung nach einem der vorhergehenden Ansprüche,
**dadurch gekennzeichnet, dass**
die Bildsensoren (14, 14') auf einem Träger (22) angeordnet sind, dem eine Antriebseinrichtung (24) zugeordnet ist.

5. Vorrichtung nach einem der vorhergehenden Ansprüche,
**dadurch gekennzeichnet, dass**
die optischen Achsen (16, 16') in einer Horizontalebene ausrichtbar sind.

6. Vorrichtung nach einem der vorhergehenden Ansprüche,
**dadurch gekennzeichnet, dass**
die optischen Achsen (16, 16') auf Kegelmantelflächen ausrichtbar sind.

7. Vorrichtung nach einem der vorhergehenden Ansprüche,
**dadurch gekennzeichnet, dass**
die Bildaufzeichnungseinheit (12) im, am oder auf einem Dachbereich des Fahrzeuges (10) angeordnet ist.

8. Vorrichtung nach einem der vorhergehenden Ansprüche,
**dadurch gekennzeichnet, dass**
die Bildsensoren (14, 14') CMOS-Kameras sind.

9. Vorrichtung nach einem der vorhergehenden Ansprüche,
**dadurch gekennzeichnet, dass**
die Antriebseinrichtungen (18, 20, 24) Schrittmotoren oder kontinuierlich verstellbare Motoren sind.

10. Vorrichtung nach einem der vorhergehenden Ansprüche,
**dadurch gekennzeichnet, dass**
von der Auswerteeinheit (32) in Abhängigkeit gelieferter Bildsignale der Bildsensoren (14, 14') Steuersignale für die Antriebseinrichtungen (18, 20, 24) generierbar sind.

**Claims**

1. Apparatus (100) for detecting objects, people or the like in the surroundings of a vehicle (10), having a stereo-sensitive image recording unit (12) which comprises at least two image sensors (14, 14'), and having an evaluation unit (32) for evaluating the signals supplied by the image sensors, **characterized in that** the optical axes (16, 16') of the image sensors (14, 14') are aligned in a fashion varied relative to one another such that an overlap region (46) of detection regions (43, 44) of the at least two image sensors is enlarged or reduced in accordance with the variation in the optical axes, it being provided that in one variant at least one of the image sensors (14') is aligned in the driving direction of the vehicle (10), while another image sensor (14) is aligned transverse to the driving direction.

2. Apparatus according to Claim 1, **characterized in that** the optical axes (16, 16') are aligned in a fashion varied relative to the vehicle (10), in particular **in that** the optical axes (16, 16') are aligned in a fashion varied relative to a vehicle longitudinal axis (26) and/or a vehicle transverse axis (28) and/or a vehicle vertical axis (30).

3. Apparatus according to one of the preceding claims, **characterized in that** each of the image sensors (14, 14') is assigned a drive device (18, 20).

4. Apparatus according to one of the preceding claims, **characterized in that** the image sensors (14, 14') are arranged on a carrier (22) which is assigned a drive device (24).

5. Apparatus according to one of the preceding claims, **characterized in that** the optical axes (16, 16') can be aligned in a horizontal plane.

6. Apparatus according to one of the preceding claims, **characterized in that** the optical axes (16, 16') can be aligned on conical lateral surfaces.

7. Apparatus according to one of the preceding claims, **characterized in that** the image recording unit (12) is arranged in, at or on a roof region of the vehicle (10).

8. Apparatus according to one of the preceding claims, **characterized in that** the image sensors (14, 14') are CMOS cameras.

9. Apparatus according to one of the preceding claims, **characterized in that** the drive devices (18, 20, 24) are stepping motors or continuously adjustable motors.

10. Apparatus according to one of the preceding claims, **characterized in that** control signals for the drive devices (18, 20, 24) can be generated by the evaluation unit (32) as a function of image signals supplied by the image sensors (14, 14').

**Revendications**

1. Dispositif (100) pour détecter des objets, des personnes ou similaires dans l'environnement d'un véhicule (10), comprenant une unité d'enregistrement d'images stéréo-sensible (12) avec au moins deux capteurs d'images (14, 14'), et une unité d'exploitation (32) des signaux fournis par les capteurs d'images,

**caractérisé en ce que**
les axes optiques (16, 16') des capteurs d'images (14, 14') sont orientés l'un par rapport à l'autre pour agrandir ou réduire une zone de chevauchement (46) des zones de détection (43, 44) d'au moins deux capteurs d'images en fonction de la variation des axes optiques, et dans une variante au moins l'un des capteurs d'images (14') est orienté dans le sens de la marche du véhicule (10) tandis qu'un autre capteur (14) est orienté transversalement à ce sens.

2. Dispositif selon la revendication 1, **caractérisé en ce que**
les axes optiques (16, 16') sont orientés par rapport au véhicule (10), en particulier les axes optiques (16, 16') sont orientés par rapport à un axe longitudinal du véhicule (26) et/ou à un axe transversal du véhicule (28) et/ou un axe vertical du véhicule (30).

3. Dispositif selon l'une des revendications précédentes, **caractérisé par**
un dispositif d'entraînement (18, 20) est associé à chaque capteur d'images (14, 14').

4. Dispositif selon l'une des revendications précédentes, **caractérisé en ce que**
les capteurs d'images (14, 14') sont disposés sur un support (22) associé à un dispositif d'entraînement (24).

5. Dispositif selon l'une des revendications précédentes, **caractérisé en ce que**
les axes optiques (16, 16') sont orientables dans un plan horizontal.

6. Dispositif selon l'une des revendications précédentes, **caractérisé en ce que**
les axes optiques (16, 16') sont orientables sur des surfaces enveloppes coniques.

7. Dispositif selon l'une des revendications précédentes, **caractérisé en ce que**
l'unité d'enregistrement d'images (12) est disposé dans ou sur une zone de toit du véhicule (10).

8. Dispositif selon l'une des revendications précédentes, **caractérisé en ce que**
les capteurs d'images (14, 14') sont des caméras CMOS.

9. Dispositif selon l'une des revendications précédentes,

**caractérisé en ce que**
les unités d'entraînement (18, 20, 24) sont des moteurs pas à pas ou des moteurs réglables en continu.

10. Dispositif selon l'une des revendications précédentes,
**caractérisé en ce que**
l'unité d'exploitation (32) peut générer des signaux de commande pour les dispositifs d'entraînement (18, 20, 24) en fonction des signaux fournis pas les capteurs d'images (14, 14').

Fig.1a

100

28

26

10  16  14  18  22  32

12  16'  14'  20

Fig.1b

14  18  32

12

14'  20

30

10  22  24

Fig.2

Fig.3

Fig.4

Fig.5

Fig.6

Fig. 7